# EUROPEAN PATENT SPECIFICATION

(11) **EP 1 316 598 B1**
(45) Date of publication and mention of the grant of the patent: **19.05.2010**
(21) Application number: 01128537.6
(22) Date of filing: 29.11.2001
(51) Int. Cl.: C09J 151/06

(54) **Adhesive polymer composition**
Polymerer Klebstoff
Composition de polymère adhésive

(43) Date of publication of application: 04.06.2003
(73) Proprietor: Borealis Technology Oy, 06101 Porvoo (FI)
(72) Inventor: Anker, Martin, 416 57 Göteborg (SE); Leidén, Leif, 07130 Andersböle (FI); Rydin, Cecilia, 444 95 Ödsmal (SE)
(74) Representative: Kador & Partner

(56) References cited:
- EP-A- 0 791 628
- EP-A- 0 896 044
- WO-A-01/55275
- DATABASE WPI Derwent Publications Ltd., London, GB; AN 1996-422109 XP002196242 & JP 08 208915 A (UBE), 13 August 1996 (1996-08-13)

## Description

The present invention relates to an adhesive polymer composition comprising an acid grafted polyethylene component and an elastomer component, to an article comprising a layer of said adhesive polymer composition, in particular a multilayer pipe such as a coated metal pipe, and to the use of the adhesive polymer composition for the production of an adhesive layer, in particular an adhesive layer of a multilayer structure of a pipe such as a coated metal pipe.

Multilayer structures comprising two, three, four, five or more layers are known for many applications such as the protective coating of pipes. In these multilayer structures different layers most often consist of different materials which accordingly have different physical and chemical properties. This results in the problem that adjacent layers do not or only to an insufficient extent adhere to each other. Therefore, it is commonly known to built up multilayer structures with intermediate adhesive layers for improving the adhesion of adjacent layers consisting of different materials and thus avoid delamination.

For example, in the coating of metal pipes commonly a three-layer polymer structure is used. It consists of an epoxy layer which is designed to firmly adhere to the outer surface of the metal wall of the pipe, an intermediate adhesive layer and an outer polyolefin protective layer which commonly is a high density polyethylene or polypropylene. The three-layer structure shows improved properties compared to formerly known single-layer coatings. On the one hand, the epoxy layer shows an improved bonding to the metal wall, avoids cathodic disbondment and provides less oxygen penetration whereas on the other hand the outer polyolefin-based layer provides good mechanical protection, and less water penetration. However, to avoid delamination of the polyolefin layer and the epoxy layer which would result in damage of the multilayer coating an adhesive layer between both layers is necessary.

Adhesive layers and materials for the production of such layers for example are known from WO 99/37730 which discloses an adhesive composition comprising an ethylene copolymer component and from 2 to 35 wt.% of a grafted metallocene polyethylene.

JP-A-8208915 describes an adhesive polyethylene composition comprising a grafted ethylene/alpha-olefin copolymer as cover for e.g. cables and steel pipes.

EP 0 896 044 relates to an adhesive resin composition, in particular used for laminates. The resin contains an alpha-olefin/aromatic vinyl compound random copolymer which is partially or wholly graft-modified.

EP 0 791 628 provides an adhesive composition comprising a grafted long-chain branched ethylene-α-olefin copolymer with a tackifier or an ethylene-vinyl acetate copolymer for use as film layers in adhesion to e.g. metals.

It is the problem of the present invention to provide an adhesive polymer composition in particular for use in the production of adhesive layers for multilayer structures with improved adhesion properties.

The present invention is based on the finding that this problem can be solved by providing adhesive polymer compositions comprising an acid grafted polyethylene which has been produced using a single-site catalyst in an amount of at least 40 wt.% of the overall composition.

The present invention therefore provides an adhesive polymer composition according to claim 1.

The inventive adhesive polymer composition shows improved adhesion properties, in particular when used as an adhesive layer. For example, the adhesive polymer composition when coextruded as an adhesive layer in the three-layer structure for coating of metal pipes shows an improved peel strength. Peel strength already is improved at room temperature and the improvement still increases at higher temperatures.

Peel strength designates the relative strength of the bonding between epoxy layer and adhesive layer. The peel strength is measured according to DIN 30 670.

It is believed that the improved adhesive properties are caused by the particular properties of polyethylene resins produced in a process comprising a single-site catalyst (single-site polyethylene) such as metallocenes. Compared to polyethylene produced by other catalytic processes e.g. comprising Ziegler-Natta catalysts single-site polyethylene, for example, shows much more uniformity in several composition related aspects such as narrow MWD or uniform comonomer distribution. Another aspect is that polymers produced with single-site catalysts do not have any low molecular weight tails. It is believed that these low molecular weight tails can migrate to the surface and change the surface properties, e.g. the adhesion properties.

The polyethylene of component a) of the inventive composition is a non-elastomeric copolymer of ethylene with one or more α-unsaturated olefinic comonomer(s), selected from the group of propylene, 1-butene, 1-pentene, 1-hexene, 4-methyl-1-pentene, 1-octene, 1-decene,styrene and mixtures thereof. Particularly preferred comonomers are propylene, 1-butene, 1-hexene, 4-methyl-1-pentene and 1-octene.

The most preferred α-olefin comonomer is 1-hexene.

Typically, the amount of comonomer within the copolymer is from 1 to 30 wt.% of the total weight of the copolymer and more preferably is from 1 to 5 wt.% of the total weight of the copolymer.

In the production of coated metal pipes having a three-layer coating preferably the epoxy layer is produced first by spraying epoxy in powder or liquid form, in one or two component form, onto the heated outer surface of the metal wall. Thereby, the epoxy forms a thin layer which firmly adheres to the metal surface. Subsequently, the adhesive and the outer polyolefin layer which preferably is a polyethylene or polypropylene layer are coextruded onto the epoxy layer. The adhesive can also be applied by spraying the adhesive in a powder form onto the epoxy layer.

According to the present invention component a) is free of long chain branches.

The term "long chain branches" refers to branches produced by polymerisation conditions but not to branches introduced by polymerisable comonomer species.

The term "free of long chained branches" is intended to designate ethylene polymers in which no long chain branching can be detected by using ¹³C nuclear magnetic resonance spectroscopy and using the quantification method as described by Randall, Rev. Macromol. Chem. Phys., C29 (2&3), p. 285-297, the disclosure of which is incorporated herein by reference. Due to measurement reasons, only branches with 6 carbon atoms or more are defined as long chain branches.

A polyethylene is free of long chain branches in the sense of the above paragraph when it has a content of long chain branches (lcb) of at least below 0.1 lcb per 1000 carbon atoms.

Such a polyethylene free of long chain branches is advantageous due to adhesion polymer properties.

In a further preferred embodiment component a) of the adhesive polymer composition is present in an amount of 50 to 90 wt.%, still further preferred of 60 to 80 wt.% of the total composition.

Further preferred, component a) of the adhesive polymer composition before grafting is having a melt flow rate MFR₂ of 1 to 20 g/10min, more preferably of 1 to 10 g/10min.

MFR₂ is measured according to ISO 1133 (Cond. 4) at a temperature of 190°C under a load of 2.16 kg.

The density of the polyethylene of component a) usually is in the range of 0.85 to 0.97 g/cm³. However, it is preferred that component a) is having a density of 0.920 to 0.970 g/cm³ and still more preferred of 0.925 to 0.945 g/cm³.

Component a) of the adhesive polymer composition can be produced in a process comprising any single-site catalyst known in the art.

It is also possible that component a) is produced in a process comprising a mixture of a single-site and another catalyst of the same or different nature. In the case of a mixture of a single-site catalyst and a catalyst of a different nature, it is preferred that at least 90% of component a) of the adhesive polymer composition is produced by a single-site catalyst.

Preferably, component a) is produced in a process comprising a metallocene catalyst. Further preferred, the catalyst comprises a metallocene component on a porous support and an alumoxane component.

Preferred catalyst are those as described in EP 0 678 103, WO 97/28170, WO 98/56831 and/or WO 00/34341.

Further preferred, component a) is produced in a process as disclosed in EP 0 678 103 which is **characterized in that** ethylene is slurry polymerised using a supported olefin polymerisation catalyst prepared by
(1) providing a porous support, which is an inorganic oxide of an element chosen from groups 2(A), 3(B) and 4 of the Periodic Table (Hubbard),
(2) providing a solution comprising
   (2.1) the reaction product of
   (2.1.1) a metallocene of the formula (I)

      (CP)ₘRₙMR'ₒXₚ (I)

      wherein Cp is an unsubstituted or substituted and/or fused homo- or hetero- cyclopentadienyl, R is a group of 1-4 atoms connecting two Cp rings, M is a transition metal of group 4A, 5A or 6A, R' is a hydrocarbyl or hydrocarboxyl group having 1-20 carbon atoms, and X is a halogen atom, in which case m = 1-3, n = 0 or 1, o = 0-3, p =0-3 and the sum m+n+p = the same as the state of oxidation of M, and
   (2.1.2) an alumoxane of the formula (II)

      R"-(AlO)ₓ-AlR"₂ (II)

      which formula (II) depicts a linear compound, and/or of the formula (III) 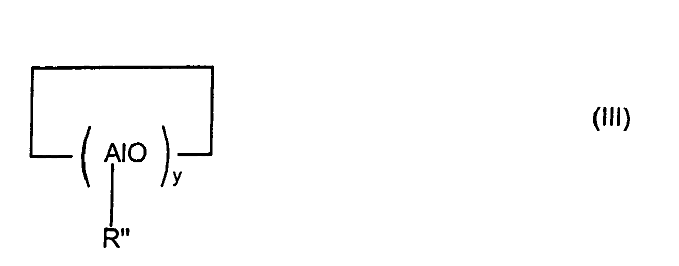 which formula (III) depicts a cyclic compound, and in which formulae (II and III) x is 1-40, preferably 10-20, y is 3-40, preferably 3-20, and R" is an alkyl group having 1-20 carbon atoms and
   (2.2) a solvent, capable of dissolving said reaction product,
(3) impregnating the porous support with a volume of the solution, which does not exceed the total pore volume of the porous support , and
(4) recovering the impregnated porous support, the pores of which are filled with said solution.

The preferred embodiments of the catalyst given in EP 0 678 103 are also preferred for the production of component a) of the adhesive polymer composition of the present invention.

In a further preferred embodiment of the invention, component a) is a multimodal polyethylene. Further preferred, the multimodal polyethylene is a bimodal polyethylene.

The expression "modality of a polymer" refers to the form of its molecular weight distribution (MWD) curve, i.e. the appearance of the graph of the polymer weight fraction as a function of its molecular weight. If the polymer is produced in a sequential step process e.g. by utilizing reactors coupled in series and using different conditions in each reactor, the different polymer fractions produced in the different reactors will each have their own molecular weight distribution which may considerably differ from one another. The molecular weight distribution curve of the resulting final polymer can be looked at as the superposition of the molecular weight distribution curves of the polymer fractions which will accordingly show two or more distinct maxima or at least be distinctly broadened compared with the curves for the individual fractions. A polymer showing such a molecular weight distribution curve is called "bimodal" or "multimodal", respectively. Multimodal polymers can be produced according to several processes which are described e.g. in WO 92/12182.

The multimodal polyethylene preferably is produced in a multi-stage process in a multi-step reaction sequence such as described in WO 92/12182. The contents of this document is included herein by reference.

In this process, in a first step ethylene is polymerized in a loop reactor in the liquid phase of an inert low-boiling hydrocarbon medium. Then, the reaction mixture after polymerisation is discharged from the loop reactor and at least a substantial part of the inert hydrocarbon is separated form the polymer. The polymer is then transferred in a second or further step to one or more gas-phase reactors where the polymerization is continued in the presence of gaseous ethylene. The multimodal polymer produced according to this process has a superior homogeneity with respect to the distribution of the different polymer fractions which cannot be obtained e.g. by a polymer mix.

The catalyst for the production of the ethylene polymer comprises a single-site catalyst, such as e.g. a metallocene catalyst. Preferred single-site catalysts are described in EP 688 794, EP 949 274, WO 95/12622, WO 00/34341 and WO 00/40620. The contents of these documents is included herein by reference. Most preferred is the catalyst as described in WO 95/12622 and its preferred embodiments as described in this document.

The multimodal polyethylene comprises a low molecular weight (LMW) ethylene homo- or copolymer fraction and a high molecular weight (HMW) ethylene homo- or copolymer fraction.

Depending on whether the multimodal ethylene polymer is bimodal or has a higher modality, the LMW and/or HMW fraction may comprise only one fraction each or two or more subfractions. The expression "ethylene homopolymer" as used herein refers to an polyethylene that consists substantially, i.e. to at least 97 % by weight, preferably at least 99 % by weight, more preferably at least 99.5 % by weight and most preferably at least 99.8 % by weight of ethylene.

Preferably, the ethylene polymer is a bimodal polymer consisting of one LMW fraction and one HMW fraction.

It is further preferred that the ethylene polymer comprises an ethylene polymer fraction selected from
(a) a LMW ethylene polymer having a density of 0.860-0.970 g/cm³, more preferably from about 0.900-0.950 g/cm³, and an MFR₂ of 0.1-5000 g/10min, more preferably of 25-300 g/10min, and
(b) a HMW polymer having a density of 0.870-0.945 g/cm³, more preferably of 0.870-0.940 g/cm³ and an MFR₂ of 0.01-10.0 g/10min, more preferably of 0.1-3 g/10min.

Thus, the low molecular weight ethylene polymer preferably is a high density type polyethylene (HDPE) and the high molecular weight ethylene polymer is a linear low density type polyethylene (LLDPE). Preferably, the ethylene polymer comprises both fractions (a) and (b).

At least one fraction of the ethylene polymer preferably is a copolymer which was polymerized with a C₃-C₈ alpha-olefin, preferably with at least one comonomer selected from the group consisting of propylene, 1-butene, 4-methyl-1-pentene, 1-hexene and 1-octene. Preferably, the amount of comonomer in the ethylene polymer is 0.02-5.0 mol%, more preferably 0.05 - 2.0 mol%.

Preferably, the HMW fraction is an ethylene copolymer, preferably copolymerized with one of the above-cited comonomers. Further preferred, the LMW fraction of the polyethylene is a homopolymer.

Further, it is preferred that if the polyethylene is produced according to the above-described multi-stage process the LMW fraction is produced in the loop reactor and the HMW fraction in the gas-phase reactor.

The properties of the multimodal polyethylene can be adjusted by the ratio of the low molecular fraction and the high molecular fraction in the multimodal polyethylene.

Preferably, the ethylene polymer comprises 35-55 % by weight, preferably 43-51 % by weight and most preferred 44-50 % by weight of a low molecular weight ethylene polymer component, and 65-45 % by weight, preferably 57-49 % by weight and most preferred 56-50 % by weight of a high molecular weight ethylene polymer component.

In a further preferred embodiment of the adhesive polymer composition the MFR₂ value of the final composition (after grafting) is 0.1 to 20 g/10min, more preferably 0.5 to 10 g/10min.

The density of the final adhesive polymer composition usually is from 0.880 to 0.970 g/cm³. It is preferred that the density of the final adhesive polymer composition is from 0.920 to 0.970 g/cm³, more preferably from 0.925 to 0.945 g/cm³.

As acid grafting agent, any such agent can be used which is known to be suitable for this purpose by the person skilled in the art.

Preferably, the acid grafting agent is an unsaturated carboxylic acid or a derivative thereof such as anhydrides, esters and salts (both metallic or non-metallic). Preferably, the unsaturated group is in conjugation with the carboxylic group.

Examples of such grafting agents include acrylic acid, methacrylic acid, fumaric acid, maleic acid, nadic acid, citraconic acid, itaconic acid, crotonic acid, and their anhydrides, metal salts, esters amides or imides.

The preferred grafting agents are maleic acid its derivatives such as maleic anhydride, and in particular maleic anhydride.

Grafting can be carried out by any process known in the art such as grafting in an melt without a solvent or in solution or dispersion or in a fluidised bed. Preferably, grafting is performed in a heated extruder or mixer as e.g. described in US 3,236,917, US 4,639,495, US 4,950,541 or US 5,194509. The contents of these documents is herein included by reference. Preferably, grafting is carried out in a twin screw extruder such as described in US 4,950,541.

Grafting may be carried out in the presence or absence of a radical initiator but is preferably carried out in the presence of a radical initiator such as an organic peroxide, organic perester or organic hydroperoxide.

The amount of said acid grafting agent added to the overall composition before grafting is preferably from 0.01 to 3.0 parts by weight, more preferably from 0.03 to 1.5 parts by weight of the overall composition.

Grafting may be applied either to component a) or to the blend of components a) and b). Preferably, grafting is applied to the blend of components a) and b).

In the inventive adhesive polymer composition component b) is an elastomeric ethylene copolymer.

Component b) comprises an elastomeric copolymer of ethylene with one or more polar monomer(s). Preferred examples of such elastomers are ethylene-alkylacrylates and ethylene-alkylacetates. Further preferred, the comonomer is having a polar moiety of the formula -O(CO)C₁-C₆-alkyl or -C(O)-OC₁-C₆-alkyl.

Particularly preferred elastomers are ethylenevinylacetate (EVA), ethylenemethylacrylate (EMA), ethylenemethylmethacrylate (EMMA), ethylenepropylacrylate and ethylenebutylacrylate (EBA), in particular EBA.

The elastomer of component b) may be made by any process known in the art also including processes comprising a single-site catalyst.

The adhesive polymer composition comprises components a) and b) as described above. In addition to these components, conventional additives may also be present in the composition in small amounts preferably up to at most 4 wt.%. For example, an antioxidant may be present in the composition in an amount of at most 10,000 ppm, more preferably at most 5,000 ppm and most preferably at most 3,000 ppm.

It is preferred that the adhesive polymer composition apart from the conventional additives consists of components a) and b), i.e. that no further polymer components before or after grafting are added.

Conventional additives may be added before or after grafting.

The adhesive polymer composition of this invention is most useful as co-extrudable adhesive, but other applications are not excluded.

The present invention also relates to an article which comprises an adhesive layer comprising the adhesive polymer composition as described above.

Such articles e.g. comprise pipes, cables, films, articles made by extrusion coating and articles used in engineering applications. In the latter, the adhesive polymer composition may also be used to provide compatibility between various layers or parts.

In a preferred embodiment, the adhesive layer in the article is adjacent to a polyolefin layer.

The present invention in particular relates to a multilayer pipe, i.e. a pipe comprising a multilayer coating with two, three, four, five or more layers, which comprises a polyolefin layer and an adhesive layer adjacent to the polyolefin layer which comprises the inventive adhesive polymer composition as described above.

In a preferred embodiment, the present invention also relates to a coated metal pipe, comprising a polyolefin layer and a layer of a polar polymer, in particular an epoxy layer, wherein between said layers an adhesive layer is present which comprises the adhesive polymer composition according to any of the above described embodiments. In particular, the present invention also relates to a metal pipe with an three-layer protective coating consisting of an inner epoxy layer, an intermediate adhesive layer comprising the inventive adhesive polymer composition and an outer polyolefin layer such as a polyethylene or polypropylene layer.

Furthermore, the present invention relates to the use of the adhesive polymer composition as described above for the production of an adhesive layer.

Preferably, the present invention further relates to the use of the adhesive composition for the production of an adhesive layer in an article as e.g. a pipe, a cable, a film, an article made by extrusion coating and articles used in engineering applications. In these latter articles, the adhesive composition may also be used to provide compatibility between various layers or parts.

In a preferred embodiment, the present invention also relates to the use of the adhesive polymer composition for the production of an adhesive layer of a pipe. In particular, the present invention also relates to the use of the adhesive polymer composition for the production of an adhesive layer of the coating of a metal pipe with a three-layer protective coating as described above.

In the following, the present invention is further illustrated by means of examples.

### Example 1:

A medium density polyethylene was produced using a single-site catalyst prepared according to example 1 of WO 95/12622. The polymerisation was carried out in a slurry loop reactor. The temperature in the reactor was 85 to 100 °C. Isobutane was used as a diluent and the pressure in the slurry loop reactor was approximately 40 bar. 1-hexene was used as a comonomer and the feed ratio was 4.8 to 5.2 kg comonomer/100 kg ethylene. The incorporation of 1-hexene was around 3.3 to 3.5 % of the total weight in the medium density polyethylene. Small amounts of hydrogen were used to control the MFR (0.33-0.37 Nm³/ton ethylene) with almost 100 % conversion.

For comparison, a medium density polyethylene was produced using a Ziegler-Natta catalyst prepared according to EP 0 688 794. Polymerisation was carried out in a gas phase reactor at a pressure of 20 bar. The partial pressure of ethylene was 5 bar and the rest of the pressure was made up of nitrogen, hydrogen and butene. Butene was used as a comonomer and the feed ratio was 43 kg butene/ton ethylene. Hydrogen was added to control the MFR with a hydrogen/ethylene ratio of 0.25. The temperature in the reactor was around 90 °C.

### Example 2:

The adhesive blend compositions in the following examples were grafted in Werner & Pfleiderer ZSK 32-mm co-rotating, twin-screw, extruder. The adhesive blend compositions are shown in Table 1. The values in the Table are given as parts by weight.

**Table 1**

| | Composition 1 (Comparative) | Composition 2 | Composition 3 | Composition 4 |
|---|---|---|---|---|
| Ziegler-Natta medium density Polyethylene | 69.2 | | | |
| Single-site medium density polyethylene | | 69.2 | 69.2 | 69.2 |
| Ethylene butyl acrylate elastomer | 29.7 | 29.7 | 29.7 | 29.7 |
| Maleic Anhydride | 0.5 | 0.5 | 0.11 | 0.06 |
| Peroxide | 0.05 | 0.05 | 0.01 | 0.005 |
| Antioxidant | 0.1 | 0.1 | 0.1 | 0.1 |
| Solvent (Isododecane) | 0.45 | 0.45 | 0.88 | 0.935 |

The Ziegler-Natta medium density polyethylene has a density of 0.934 g/cm³ and an MFR₂ value of 3.6 g/10 min. The single-site medium-density polyethylene, characterised of no long chain branches, has a density of 0.934 g/cm³ and an MFR₂ value of 6 g/10 min. The M_{w}/Mₙ value of the single-site medium-density polyethylene is about 2. The ethylene butyl acrylate elastomer, having a density of 0.926 g/cm³ and an MFR₂ value of 4 g/10 min, was added to impart flexibility.

1000 ppm of antioxidant was added as stabiliser and the graft was achieved by adding various amounts of maleic anhydride. The peroxide initiator (Perkadox 14S-fl, Akzo Nobel) was dissolved in isododecane. The temperature in the extruder was varied between 170 and 210 °C and the screw speed was set at 200 rpm. The resulting grafted adhesive blend compositions had a density of 0.934 g/m³ and MFR₂ values of 1.0, 1.2, 4.6, and 5.3 g/10 min for composition 1, 2, 3, and 4, respectively.

### Example 3:

Table 2 shows an example of the adhesion properties (peel strength) of co-extrudable adhesives coated on steel pipes. The comparison is made between the same adhesive blend composition except for the base polymer; Ziegler-Natta polyethylene (Composition 1) versus single-site polyethylene (Composition 2). First, epoxy powder was sprayed on as corrosion protection, where the temperature of the rotating steel pipeline (8 m/min) was 190-200°C. Subsequently, the adhesive blend composition and the conventional high-density polyethylene outer layer was co-extruded onto the epoxy layer. The co-extrusion was performed with two Barmag 60-mm single screw extruders. The temperature at the die of the adhesive blend composition and the high-density polyethylene was 225 and 250°C, respectively. Normal thickness values for the epoxy layer is 135 µm, the adhesive blend composition 290 µm, and the polyethylene outer layer 3.2 mm. Both the adhesive blend composition and high-density polyethylene layer are rolled tightly onto the coating surface with a silicone pressure roller. The cooled three layer composition was evaluated by measuring its peel strength with an Instron machine.

**Table 2**

| Test Temperature | Peel Strength (N/cm) | |
|---|---|---|
| | Composition 1 (Comparative) | Composition 2 |
| 23°C | 400 | 468 |
| 70°C | 95 | 222 |
| 85°C | 48 | 131 |
| 95-100°C | - | 95 |

The peel strength of the grafted blend composition based on the single-site polyethylene (Composition 2) is superior compared with the grafted blend compositions based on Ziegler-Natta polyethylene (Composition 1). This is particularly true for high temperature peel strength at temperatures above room temperature up to 100°C.

### Example 4:

Table 3 shows an example of the adhesion properties (peel strength) of co-extrudable adhesives with decreased amount of maleic anhydride and peroxide. The co-extrudable adhesives (Composition 2, 3, and 4) were coated onto steel pipes as described in Example 2.

**Table 3**

| Test Temperature | Peel Strength /N(cm) | | |
|---|---|---|---|
| | Composition 2 | Composition 3 | Composition 4 |
| 23°C | 468 | 399 | 398 |
| 70°C | 222 | 186 | - |
| 85°C | 131 | 141 | 133 |
| 95-100 C | 90 | 74 | 60 |

The peel strength of the grafted blend composition based on the single-site polyethylene show that the MFR₂ values can be varied from 1.2, 4.6. and 5.3 g/10 min for Composition 2, 3, and 4, respectively. The peel strength values of the single-site polyethylene grafted with lower maleic anhydride (Composition 2 and 3) are still superior compared with the grafted blend compositions based on Ziegler-Natta polyethylene (Composition 1). This is particularly true at temperatures higher than room temperature.

## Claims

1. An adhesive polymer composition comprising
a) a non-elastomeric copolymer of ethylene with one or more comonomers selected from the group of propylene, 1-butene, 1-pentene, 1-hexene, 4-methyl-1-pentene, 1-octene and 1-decene, which is free of long chain branches, in an amount of 40 to 97 wt.% of the total composition and
b) an elastomer comprising an elastomeric copolymer of ethylene with polar comonomers,
wherein component a) has been produced in a process using a single-site catalyst and component a) or components a) and b) have been grafted with an acid grafting agent.

2. The adhesive polymer composition according to claim 1 wherein said component a) is present in an amount of 50 to 90 wt.%, more preferably of 60 to 80 wt.% of the total composition.

3. The adhesive polymer composition according to any of the preceding claims wherein said component a) is having a MFR₂ (measured at a temperature of 190 °C under a load of 2.16 kg) of 1 to 20 g/10min, more preferably of 1 to 10 g/10min.

4. The adhesive polymer composition according to any of the preceding claims wherein said component a) is having a density of 0.920 to 0.970 g/cm³, more preferably of 0.925 to 0.945 g/cm³.

5. The adhesive polymer composition according to any of the preceding claims, wherein said component a) is a polyethylene with multimodal weight distribution.

6. The adhesive polymer composition according to any of the preceding claims wherein said single-site catalyst comprises a metallocene component on a porous support and an alumoxane component.

7. The adhesive polymer composition according to any of the preceding claims wherein the MFR₂ value (measured at a temperature of 190°C under a load of 2.16 kg) of the overall composition is 0.1 to 20 g/10min, more preferably 0.5 to 10 g/10min.

8. The adhesive polymer composition according to any of the preceding claims wherein the density of the overall composition is 0.920 to 0.970 g/cm³, more preferably 0.925 to 0.945 g/cm³.

9. The adhesive polymer composition according to any of the preceding claims wherein the acid grafting agent is an unsaturated carboxylic acid or a derivative thereof, more preferably maleic acid or a derivative thereof, in particular maleic anhydride.

10. The adhesive polymer composition according to any of the preceding claims wherein the amount of said acid grafting agent is from 0.01 to 3.0 parts by weight, more preferably from 0.03 to 1.5 parts by weight of the overall composition.

11. An article, in particular a multilayer pipe, comprising an adhesive layer which comprises the adhesive polymer composition according to any of the preceding claims.

12. Use of the adhesive polymer composition according to any of claims 1 to 10 for the production of an adhesive layer, in particular of an adhesive layer of a pipe.

## Patentansprüche

1. Polymerer Klebstoff, umfassend:
a) ein nicht-elastomeres Copolymer von Ethylen mit einem oder mehreren Comonomeren, ausgewählt aus der Gruppe von Propylen, 1-Buten, 1-Penten, 1-Hexen, 4-Methyl-1-penten, 1-Octen und 1-Decen, das frei von langkettigen Verzweigungen ist, in einer Menge von 40 bis 97 Gew.-% der gesamten Zusammensetzung und
b) ein Elastomer, das ein elastomeres Copolymer von Ethylen mit polaren Comonomeren umfaßt,
wobei die Komponente a) in einem Verfahren unter Verwendung eines Katalysators mit einheitlichen aktiven Zentren erzeugt worden ist und die Komponente a) oder die Komponenten a) und b) mit einem sauren Pfropfmittel gepfropft worden sind.

2. Polymerer Klebstoff nach Anspruch 1, wobei die Komponente a) in einer Menge von 50 bis 90 Gew.-%, stärker bevorzugt von 60 bis 80 Gew.-% der gesamten Zusammensetzung vorliegt.

3. Polymerer Klebstoff nach einem der vorstehenden Ansprüche,
wobei die Komponente a) einen MFR₂-Wert (bei einer Temperatur von 190°C unter einer Last von 2,16 kg gemessen) von 1 bis 20 g/10 min, stärker bevorzugt von 1 bis 10 g/10 min aufweist.

4. Polymerer Klebstoff nach einem der vorstehenden Ansprüche,
wobei die Komponente a) eine Dichte von 0,920 bis 0,970 g/cm³, stärker bevorzugt von 0,925 bis 0,945 g/cm³ aufweist.

5. Polymerer Klebstoff nach einem der vorstehenden Ansprüche,
wobei die Komponente a) ein Polyethylen mit einer multimodalen Gewichtsverteilung ist.

6. Polymerer Klebstoff nach einem der vorstehenden Ansprüche,
wobei der Katalysator mit einheitlichen aktiven Zentren eine Metallocenkomponente auf einem porösen Träger und eine Alumoxankomponente umfaßt.

7. Polymerer Klebstoff nach einem der vorstehenden Ansprüche,
wobei der MFR₂-Wert (bei einer Temperatur von 190°C unter einer Last von 2,16 kg gemessen) der gesamten Zusammensetzung 0,1 bis 20 g/10 min, stärker bevorzugt 0,5 bis 10 g/10 min beträgt.

8. Polymerer Klebstoff nach einem der vorstehenden Ansprüche,
wobei die Dichte der gesamten Zusammensetzung 0,920 bis 0,970 g/cm³, stärker bevorzugt 0,925 bis 0,945 g/cm³ beträgt.

9. Polymerer Klebstoff nach einem der vorstehenden Ansprüche,
wobei das saure Pfropfmittel eine ungesättigte Carbonsäure oder ein Derivat davon, stärker bevorzugt Maleinsäure oder ein Derivat davon, insbesondere Maleinsäureanhydrid ist.

10. Polymerer Klebstoff nach einem der vorstehenden Ansprüche,
wobei die Menge des Pfropfmittels 0,01 bis 3,0 Gew.-Teile, stärker bevorzugt 0,03 bis 1,5 Gew.-Teile der gesamten Zusammensetzung beträgt.

11. Gegenstand, insbesondere ein mehrschichtiges Rohr, umfassend eine Klebemittelschicht, die den polymeren Klebstoff nach einem der vorstehenden Ansprüche aufweist.

12. Verwendung des polymeren Klebstoffs nach einem der Ansprüche 1 bis 10 für die Herstellung einer Klebemittelschicht, insbesondere einer Klebemittelschicht eines Rohrs.

## Revendications

1. Composition polymère adhésive comprenant
a) un copolymère d'éthylène non élastomère avec un ou plusieurs comonomères choisis parmi le groupe consistant en propylène, 1-butène, 1-pentène, 1-hexène, 4-méthyl-1-pentène, 1-octène et 1-décène, qui est dépourvu de ramifications à longue chaîne, dans une quantité de 40 % à 97 % en poids de la composition totale et
b) un élastomère comprenant un copolymère d'éthylène élastomère avec des comonomères polaires,
où le composant a) a été produit dans un procédé utilisant un catalyseur à un seul site et le composant a) ou les composants a) et b) ont été greffés avec un agent de réticulation acide.

2. Composition polymère adhésive selon la revendication 1, où ledit composant a) est présent dans une quantité de 50 % à 90 % en poids, de manière plus préférée de 60 % à 80 % en poids de la composition totale.

3. Composition polymère adhésive selon l'une quelconque des revendications précédentes, où ledit composant a) est un composant ayant un MFR₂ (mesuré à une température de 190°C sous une charge de 2,16 kg) de 1 à 20 g/10 min, de manière plus préférée de 1 à 10 g/10 min.

4. Composition polymère adhésive selon l'une quelconque des revendications précédentes, où ledit composant a) est un composant ayant une masse volumique de 0,920 à 0,970 g/cm³, de manière plus préférée de 0,925 à 0,945 g/cm³.

5. Composition polymère adhésive selon l'une quelconque des revendications précédentes, où ledit composant a) est un polyéthylène avec une distribution de poids multimodale.

6. Composition polymère selon l'une quelconque des revendications précédentes, où ledit catalyseur à un seul site comprend un composant métallocène sur un support poreux et un composant alumoxane.

7. Composition polymère adhésive selon l'une quelconque des revendications précédentes, où la valeur de MFR₂ (mesuré à une température de 190°C sous une charge de 2,16 kg) de la composition totale est de 0,1 à 20 g/10 min, de manière plus préférée de 0,5 à 10 g/10 min.

8. Composition polymère adhésive selon l'une quelconque des revendications précédentes, où la masse volumique de la composition totale est de 0,920 à 0,970 g/cm³, de manière plus préférée de 0,925 à 0,945 g/cm³.

9. Composition polymère adhésive selon l'une quelconque des revendications précédentes, où l'agent de réticulation acide est un acide carboxylique insaturé ou un dérivé de celui-ci, de manière plus préférée l'acide maléique ou un dérivé de celui-ci, en particulier l'anhydride maléique.

10. Composition polymère adhésive selon l'une quelconque des revendications précédentes, où la quantité dudit agent de réticulation acide est de 0,01 à 3,0 parties en poids, de manière plus préférée de 0,03 à 1,5 parties en poids de la composition totale.

11. Article, en particulier un tuyau multicouche, comprenant une couche adhésive qui comprend la composition polymère adhésive selon l'une quelconque des revendications précédentes.

12. Utilisation de la composition polymère adhésive selon l'une quelconque des revendications 1 à 10 pour la production d'une couche adhésive, en particulier dans une couche adhésive d'un tuyau.
